# FASCICULE DE BREVET EUROPEEN

(11) **EP 3 008 399 B1**
(45) Date de publication et mention de la délivrance du brevet: **12.04.2023**
(21) Numéro de dépôt: 14735629.9
(22) Date de dépôt: 13.06.2014
(51) Int. Cl.: F24H 9/20, F24D 17/00, F24D 19/10, G05D 23/19, F28D 20/00, H02J 3/14, H05B 1/02

(54) **CONTRÔLE DE L'ALIMENTATION ÉLECTRIQUE D'UN SYSTÈME DE FOURNITURE D'EAU CHAUDE**
STEUERUNG DER STROMVERSORGUNG EINES SYSTEMS ZUR WARMWASSERVERSORGUNG
CONTROL OF THE POWER SUPPLY OF A SYSTEM FOR SUPPLYING HOT WATER

(30) Priorité: 14.06.2013 FR 1355602
(43) Date de publication de la demande: 20.04.2016
(73) Titulaire: Electricité de France, 75008 Paris (FR)
(72) Inventeur: JICQUEL, Jean-Marc, 77250 Moret Sur Loing Cedex (FR); DOUCET, Jean-François, 77250 Moret Sur Loing Cedex (FR)
(74) Mandataire: Plasseraud IP
(86) Numéro de dépôt international: PCT/FR2014/051470
(87) Numéro de publication internationale: WO 2014/199104

(56) Documents cités:
- WO-A1-2009/067208
- GB-A- 2 487 148
- US-A1- 2003 178 408
- US-A1- 2011 123 179

## Description

La présente invention concerne le contrôle de l'alimentation électrique dans des installations de production alimentées électriquement, et en particulier dans des installations de production électrique d'Eau Chaude Sanitaire (ECS) collective.

Elle trouve des applications dans les secteurs de l'hôtellerie, de l'habitat communautaire, de la santé ou du résidentiel groupé.

De telles installations comprennent au moins un ballon d'eau chaude, le plus souvent trois ballons d'eau reliés en série, un premier ensemble de ballons étant apte à être alimenté en eau froide et un deuxième ensemble de ballons étant apte à distribuer l'eau chaude. Chacun des ballons comprend un thermoplongeur dédié qui est apte à réchauffer l'eau contenue dans le ballon.

Le chauffage de l'eau chaude a généralement lieu durant une tranche horaire nommée Heures Creuses et notée HC ci-après, par opposition à la tranche horaire nommée Heures Pleines et notée HP.

Le fait de chauffer uniquement durant la tranche horaire HC ne permet pas la prise en compte de consignes de délestage envoyées par le fournisseur d'énergie et permettant la réduction de la puissance appelée par l'établissement (et par conséquent la réduction des coûts). En effet, pour les établissements précités, il convient d'assurer une production suffisante d'ECS, et notamment d'atteindre une température règlementaire dans le ou les ballons d'eau chaude (60°C typiquement) à l'issue de la tr anche horaire HC.

Or, il existe un besoin de diminuer la puissance appelée par un établissement dans les tranches tarifaires HP et HC tout en garantissant une température réglementaire en sortie du système de fourniture d'eau chaude de l'établissement.

Le document US 2003/178408 divulgue un système de chauffage d'eau comprenant un chauffe-eau, une valve de mélange et un contrôleur. Le chauffe-eau inclut un thermostat connecté à l'élément chauffant.

La présente invention vient améliorer la situation.

Un premier aspect de l'invention concerne à cet effet un procédé de contrôle de l'alimentation électrique d'un système de fourniture d'eau chaude comprenant les caractéristiques de la revendication 1.

Ainsi, la prise en compte ou non d'une commande de coupure de l'alimentation électrique du système dépend de l'appartenance d'un instant de coupure à la première ou à la deuxième plage horaire. En effet, la première plage horaire est dédiée au chauffage des ballons, typiquement durant les heures creuses. La deuxième plage horaire quant à elle peut correspondre aux heures pleines, durant lesquelles des pics de consommation d'eau chaude peuvent intervenir. L'invention permet ainsi de différencier ces plages horaires lors de la prise en compte conditionnelle d'une commande de coupure, en vue d'assurer un approvisionnement suffisant en eau chaude.

Selon une réalisation de l'invention, le système peut comprendre en outre des moyens de puisage d'eau froide en entrée du système, la seconde plage horaire étant divisée en des première et seconde parties, un seuil de relance peut être prédéterminé, l'unité de chauffage du ballon peut être active si, à l'issue de la première partie de la seconde plage horaire, un volume puisé par le système est supérieur audit seuil de relance, et, si l'instant de coupure appartient à la seconde plage horaire, l'alimentation électrique de l'unité de chauffage du ballon d'eau peut être coupée si l'instant de coupure est antérieur à un instant donné et la coupure est effective jusqu'à l'instant donné.

Ainsi, dans le cas où une relance a besoin d'être effectuée pendant la seconde plage horaire (typiquement lorsqu'une quantité importante d'eau chaude a été soutirée le matin), ce mode de réalisation permet d'assurer que la coupure n'intervient pas après un instant donné. Une durée de relance minimale est ainsi assurée.

En complément, l'instant donné peut dépendre d'un instant de fin de relance prédéterminé, d'une durée de relance et d'une durée pendant laquelle l'unité de chauffage du ballon est active dans la période de la seconde plage horaire précédant l'instant de coupure.

Ce mode de réalisation permet d'assurer qu'une relance est effectuée avant un instant de fin de relance, qui peut par exemple correspondre au début d'un pic de consommation (typiquement durant la soirée).

Selon l'invention, si l'instant de coupure appartient à la première plage horaire, l'alimentation électrique de l'unité de chauffage du ballon d'eau est coupée.

Ainsi, lorsque l'instant de coupure intervient pendant la première plage horaire durant laquelle l'unité de chauffage est active, l'alimentation électrique de l'unité de chauffage est coupée. De manière préférentielle, la coupure de l'unité de chauffage est assortie d'une durée de délestage maximale (par exemple de 1h à 2h), afin d'assurer une température règlementaire minimale en fin de première plage horaire.

Selon l'invention, le système comprend en outre des moyens de puisage d'eau froide en entrée du système, la seconde plage horaire étant divisée en des première et seconde parties, un seuil de relance est prédéterminé, l'unité de chauffage du ballon est active si, à l'issue de la première partie de la seconde plage horaire, un volume puisé par le système est supérieur au seuil de relance ayant une valeur initiale, et le procédé comprend en outre, durant la seconde plage horaire suivant la première plage horaire comprenant l'instant de coupure, la fixation du seuil de relance à une valeur inférieure à la valeur initiale.

Par conséquent, l'invention permet de rattraper la coupure temporaire intervenue pendant la première plage horaire, durant la seconde plage horaire, en abaissant le seuil à partir duquel une relance de l'unité de chauffage est effectuée.

En variante, si à l'issue de la première plage horaire à laquelle appartient l'instant de coupure, une température du ballon d'eau est inférieure à une température prédéterminée, le procédé peut comprendre la relance de l'unité de chauffage du ballon d'eau durant la seconde plage horaire consécutive à ladite première plage horaire, pendant une durée égale à la durée de coupure de l'unité de chauffage.

Par exemple, la relance peut être activée dès le début de la seconde plage horaire, pendant une durée correspondant à la durée de coupure de l'unité de chauffage. Aucune restriction n'est attachée à la température prédéterminée. Elle peut par exemple être fixée à 55°C. Un tel mode de réalisation permet ainsi d'assurer que même en cas de coupure sélective durant la première plage horaire, l'approvisionnement d'eau chaude à une température supérieure à une température donnée est permis durant la seconde plage horaire, correspondant à la plage des heures pleines.

Selon une réalisation de l'invention, le système peut comprendre au moins trois ballons d'eau, dont un ensemble d'entrée comprenant au moins un ballon d'entrée comprenant des moyens de puisage d'eau froide en entrée du système, un ensemble de soutirage comprenant au moins un ballon de soutirage comprenant des moyens de soutirage pour délivrer de l'eau chaude en sortie du système, et un ballon de relance compris entre l'ensemble d'entrée et l'ensemble de soutirage. La coupure conditionnelle de l'alimentation électrique peut alors être appliquée à l'unité de chauffage du ballon de relance.

Un tel mode de réalisation permet de couper uniquement l'alimentation électrique de l'unité de chauffage du ballon de relance.

Un deuxième aspect de l'invention concerne un produit programme d'ordinateur comprenant des instructions de code de programme enregistrées sur un support lisible par un ordinateur, pour l'exécution des étapes du procédé selon le premier aspect de l'invention.

Un troisième aspect de l'invention concerne un dispositif de contrôle de l'alimentation électrique d'un système de fourniture d'eau chaude comprenant les caractéristiques de la revendication 8.

Un quatrième aspect de l'invention concerne un système de fourniture d'eau chaude comprenant les caractéristiques de la revendication 9.

D'autres caractéristiques et avantages de l'invention apparaîtront à l'examen de la description détaillée ci-après, et des dessins annexés sur lesquels:
- la figure 1 illustre un système de fourniture d'eau chaude selon un mode de réalisation de l'invention ;
- la figure 2 représente un dispositif de contrôle de l'alimentation électrique d'un système de fourniture d'eau chaude selon un mode de réalisation de l'invention ;
- la figure 3 est un diagramme représentant les étapes d'un procédé de codage selon certains modes de réalisation.

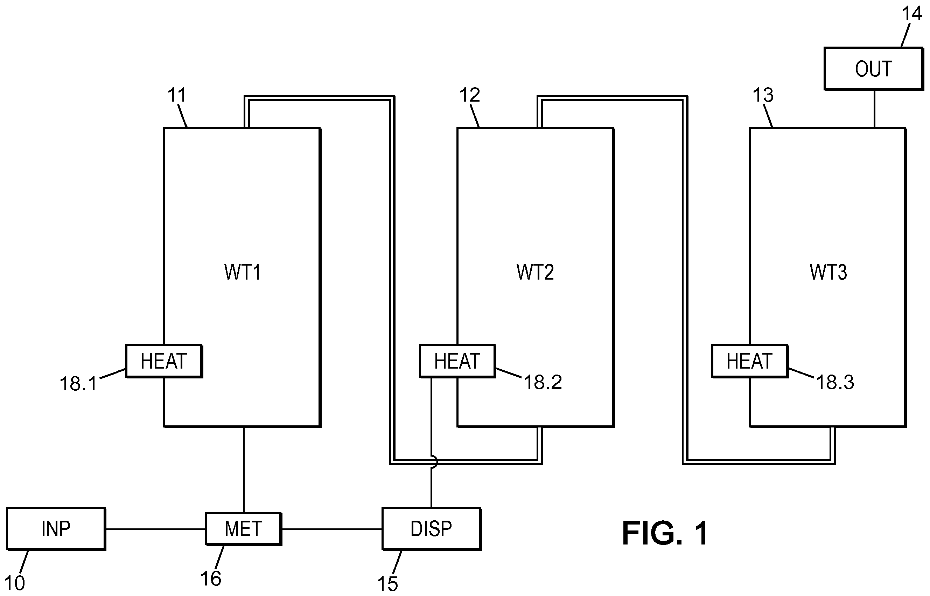

La figure 1 illustre un système de fourniture d'eau chaude selon un mode de réalisation de l'invention.

Le système de fourniture d'ECS comprend des moyens de puisage 10 d'eau froide en entrée du système. Le système comprend en outre un ballon d'entrée 11, un ballon de relance 12, un ballon de soutirage 13 et des moyens de soutirage 14 pour délivrer de l'eau chaude en sortie.

Une telle structure de système de fourniture d'ECS est uniquement donnée à titre illustratif et ne restreint aucunement l'invention à cette seule structure. En effet, le système de fourniture d'ECS peut comprendre plus de trois ballons, et, dans ce cas, le ballon d'entrée 11 est un ensemble de ballons d'entrée 11 et le ballon de soutirage 13 est un ensemble de ballons de soutirage 13, le ballon de relance 12 se situant bien souvent à mi-volume du système de fourniture d'ECS. A cet effet, le système peut comprendre deux ballons d'entrée 11, un ballon de relance 12 et un ballon de soutirage 13, ou encore deux ballons d'entrée 11, un ballon de relance 12 et deux ballons de soutirage 13.

Selon l'invention, le système de fourniture d'ECS peut également comprendre moins de trois ballons :
- un unique ballon de relance 12 ;
- un ballon d'entrée 11 et un ballon de relance 12 ; ou
- un ballon de relance 12 et un ballon de soutirage 13.

Les moyens de puisage 10 et de soutirage 14 ont été représentés indépendamment des ballons d'eau. Cependant, l'invention prévoit également que les moyens de puisage 10 soient intégrées au premier ballon d'entrée 11 d'un ensemble de ballons d'entrée, et que les moyens de soutirage 14 soient intégrés dans le dernier ballon de soutirage 13 d'un ensemble de ballons de soutirage. Dans le cas où le système comprend uniquement un ballon de relance 12 ou bien uniquement deux ballons, les moyens de puisage ou de soutirage peuvent être intégrés dans le ballon de relance.

Chaque ballon d'eau est équipé d'une unité de chauffage dédiée, appelée de manière invariante thermoplongeur par la suite. Toutefois, aucune restriction n'est attachée au type d'unité de chauffage employée pour le chauffage de l'eau. Le ballon d'entrée 11 comprend ainsi un thermoplongeur 18.1, le ballon de relance 12 comprend un thermoplongeur 18.2 et le ballon de soutirage comprend un thermoplongeur 18.3.

On distingue généralement deux plages horaires distinctes communément appelées heures creuses HC et heures pleines HP. La période correspondant aux HC sera appelée première plage horaire et la période correspondant aux HP sera appelée seconde plage horaire dans ce qui suit. Par exemple, la première plage horaire peut être une période nocturne de huit heures. Durant la première plage horaire, les thermoplongeurs 18.1, 18.2 et 18.3 sont actifs de manière à assurer une température réglementaire (typiquement 60°C) dans les ballons d'eau le matin, lorsque débute la seconde plage horaire. Les thermoplongeurs 18.1, 18.2 et 18.3 sont désactivés par défaut pendant la seconde plage horaire.

En outre, le système comprend un capteur volumique 16 apte à mesurer un volume puisé par le système au niveau des moyens de puisage 10.

Un tel système permet de palier à un problème de sous-dimensionnement des installations d'ECS en gérant une relance conditionnelle pour les jours de puisage élevé. Si l'installation est surdimensionnée, il est possible de mettre un ballon d'eau en attente à des fins de maintenance ou reprise en secours éventuelle.

Le capteur volumique 16 et le dispositif 15 forment ensemble un module de contrôle de l'alimentation électrique du système au sens de l'invention.

Le capteur volumique 16 transmet au dispositif 15 des informations concernant le volume d'eau froide puisé par le système de fourniture d'ECS.

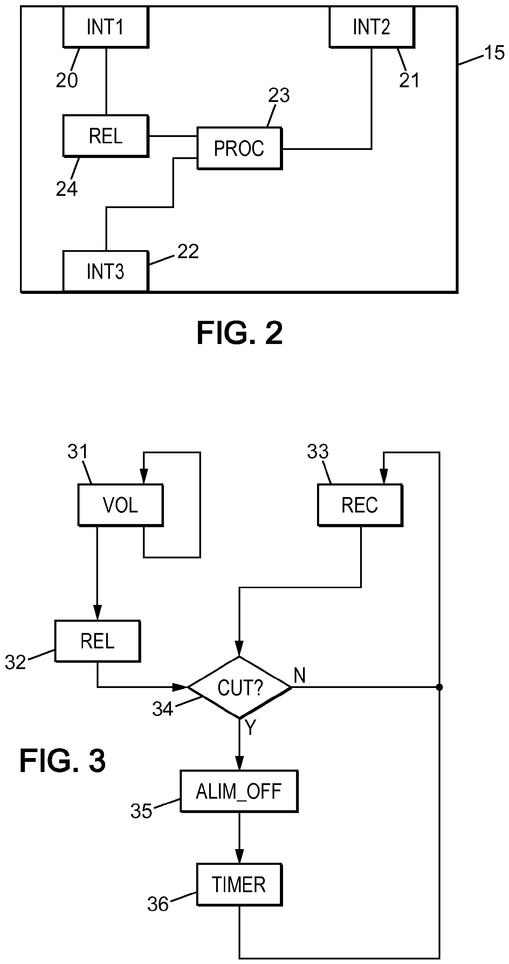

Le dispositif 15 est illustré plus en détails en référence à la figure 2.

Le dispositif 15 comprend une première interface 20 apte à recevoir les informations concernant le volume d'eau froide puisé par le système de fourniture d'ECS du capteur volumique 16.

Une unité de relance 24 du dispositif 15 est apte à enclencher l'unité de chauffage 18.2 du ballon de relance 12 en fonction du volume puisé par le système et d'un instant considéré.

Le soutirage d'ECS dans des bâtiments d'hébergement dans des domaines tels que l'hôtellerie, l'habitat communautaire, la santé, le résidentiel collectif, se répartit en deux pointes distinctes le matin et le soir (en début et en fin de la seconde plage horaire). La seconde plage horaire peut être divisée en une première partie et une seconde partie, la transition vers la seconde partie ayant par exemple lieu à la mi-journée. Selon l'invention, si à l'issue de la première partie, le volume puisé mesuré par le capteur volumique 16 est supérieur à un seuil de relance prédéterminé, l'unité de relance 24 du dispositif 15 enclenche l'unité de chauffage 18.2 du ballon de relance 12. Dans le cas contraire, aucune relance n'est effectuée. L'unité de relance 24 prend ainsi en compte le volume puisé en entrée du système et l'instant considéré afin de décider si une relance de l'unité de chauffage 18.2 doit être effectuée. A cet effet, l'unité de relance 24 peut être reliée à un contacteur HP/HC ou à une horloge, non représenté sur la figure 2.

Ainsi, selon l'invention, seule l'unité de chauffage 18.2 est relancée. En effet, il n'est pas utile de relancer le ballon (ou les ballons) d'entrée 11 déjà complètement froid ni le ballon (ou les ballons) de soutirage encore entièrement chaud (aux pertes thermiques près). La couverture de la pointe de consommation correspondant à la fin de la seconde plage horaire (le soir) est ainsi garantie, la relance n'étant effectuée par l'unité de relance 24 que si elle est nécessaire.

Le dispositif comprend en outre une unité de réception 22 d'une commande de coupure de l'alimentation électrique du système comportant un instant de coupure. La commande de coupure peut provenir d'une unité de gestion de l'établissement ou peut provenir directement du fournisseur d'énergie, aucune restriction n'étant attachée à son origine. La commande de coupure est ensuite transmise à une unité de détermination d'un ordre de coupure de l'alimentation électrique de l'unité de chauffage 18.2 du ballon de relance en fonction d'une position temporelle de l'instant de coupure par rapport aux première et seconde plages horaires

Durant la tranche HP, il est possible que le fonctionnement du ballon de relance 12 (relancé par l'unité de relance 24) occasionne des pics de puissance. Un délestage permettrait ainsi de limiter la puissance appelée par le système, mais il convient de garantir une production d'ECS permettant d'alimenter l'établissement. L'unité de détermination applique un traitement différencié à l'ordre de coupure, selon que l'instant de coupure appartienne à la première plage horaire ou à la seconde plage horaire.

A cet effet, l'unité de détermination 23 détermine si l'instant de coupure appartient à la seconde plage horaire (tranche HP), et si l'instant de coupure est antérieur à un instant donné. Dans ce cas, un ordre de coupure est généré afin de couper l'alimentation électrique de l'unité de chauffage 18.2 du ballon de relance 12 jusqu'à l'instant donné. A cet effet, le dispositif 15 comprend en outre une deuxième interface 21 apte à communiquer avec l'unité de chauffage 18.2 du ballon de relance 12, en vue de commander son alimentation électrique par l'envoi d'un ordre de coupure, ainsi qu'un compteur temporel pour couper l'alimentation électrique jusqu'à l'instant donné.

Aucune restriction n'est attachée à la manière dont l'instant donné est déterminé. Il peut par exemple être prédéfini (il intervient par exemple n heures avant la fin de la tranche HP, n étant prédéfini). En variante, l'instant donné peut être déterminé à partir d'un instant t de fin de relance prédéterminé, d'une durée D₁ de relance et d'une durée D₂ pendant laquelle l'unité de chauffage du ballon est active dans la période de la seconde plage horaire précédant l'instant de coupure. L'instant t de fin de relance prédéterminé peut par exemple être fixé à 18h. La durée D₁ de relance correspond au temps normal pour que l'eau dans le ballon de relance 12 soit porté à température règlementaire, par exemple 4 heures. La durée D₂ pendant laquelle l'unité de chauffage 18.2 du ballon de relance 12 est active dans la période de la seconde plage horaire précédant l'instant de coupure peut être déterminée par l'unité de détermination 23 car elle est reliée à l'unité de relance 24. A cet effet, l'unité de détermination 23 peut comprendre un compteur temporel qui peut être enclenché sur envoi d'un ordre de relance par l'unité de relance 24 à l'unité de chauffage 18.2 du ballon de relance 12.

L'instant donné peut alors être déterminé de la manière suivante : t - D₁ + D₂.

La prise en compte de l'instant donné dans la coupure conditionnelle de l'unité de chauffage 18.2 permet avantageusement de réduire la consommation de puissance électrique par le système d'ECS tout en permettant une relance suffisante de l'unité de chauffage 18.2 lorsqu'une telle relance est nécessaire.

Si l'instant de coupure appartient à la première plage horaire (HC), l'unité de détermination 23 génère un ordre de coupure à destination de l'unité de chauffage 18.2 du ballon de relance 12 en vue de couper son alimentation électrique. La durée du délestage peut être limitée, par exemple à 1 ou 2 heures. Le chauffage du ballon de relance 12 peut alors être compensé pendant la deuxième plage horaire, par exemple en réduisant la valeur du seuil de relance. En variante, si l'unité de chauffage 18.2 a été coupée durant une durée de coupure D3 (par exemple deux heures) durant la première plage horaire, un mode de réalisation prévoit de mesurer la température du ballon de relance 12 à l'issue de la première plage horaire. Si la température mesurée est inférieure à une température prédéterminée (par exemple 55°C), l'invention peut prévoir de relancer l'unité de chauffage 18.2 (et éventuellement les autres unités de chauffage) durant une durée égale à la durée de coupure D3 durant la seconde plage horaire. Par exemple, une telle relance peut être opérée dès le début de la seconde plage horaire consécutive à la première plage horaire durant laquelle la coupure a été opérée.

De manière complémentaire, il est possible de prévoir une durée maximale D4 (par exemple une heure) de coupure de l'alimentation électrique de l'unité de chauffage 18.2 pour la seconde plage horaire en question. Ainsi, il est possible de limiter la coupure durant la seconde plage horaire lorsqu'une relance a été nécessaire au début de la seconde plage horaire, suite à une température insuffisante à la fin de la première plage horaire.

Dans les exemples précédemment décrits, l'ordre de coupure est uniquement généré de manière conditionnelle pour l'unité de chauffage 18.2. L'invention peut également prévoir la coupure de l'alimentation électrique des unités de chauffage 18.1 et 18.3.

La figure 3 est un diagramme illustrant les étapes d'un procédé selon l'invention.

A une étape 31, le capteur volumique 16 mesure le volume d'eau puisé en entrée du système et transmet des informations relatives au volume puisé à l'unité de relance 24 via la première interface 20. Aucune restriction n'est attachée à la fréquence à laquelle le volume puisé est mesuré. En outre, les informations peuvent être transmises en mode « push », à l'initiative du capteur volumique 16 et à fréquence régulière, ou en mode « pull » sur requête de l'unité de relance 24. L'étape 31 est effectuée en continu.

A une étape 32, l'unité de relance 24, sur la base des informations reçues et de l'instant considéré, détermine si le thermoplongeur 18.2 du ballon de relance 12 doit être enclenché ou non. L'absence ou présence de relance est communiquée à l'unité de détermination 23, afin notamment qu'elle puisse enclencher un compteur temporel, tel que précédemment expliqué.

A une étape 33, une commande de coupure est reçue via l'unité de réception 22 et est transmise à l'unité de détermination 23. La commande de coupure comprend un instant de coupure.

A une étape 34, sur réception de la commande de coupure, l'unité de détermination 23 détermine un ordre de coupure de l'alimentation électrique de l'unité de chauffage en fonction d'une position temporelle de l'instant de coupure par rapport aux première et seconde plages horaires, tel que précédemment détaillé.

Si aucun ordre de coupure n'est généré, le procédé est itéré sur réception d'une nouvelle commande de coupure à l'étape 33.

Dans le cas où un ordre de coupure de l'alimentation électrique de l'unité de chauffage 18.2 est généré, l'ordre de coupure est envoyé à une étape 35 à l'unité de chauffage 18.2. Un tel ordre peut être assorti d'une durée de coupure (lorsqu'elle intervient durant la première plage horaire) ou la coupure peut être effective jusqu'à l'instant donné précédemment défini (lorsqu'elle intervient durant la seconde plage horaire), et l'alimentation de l'unité de chauffage 18.2 est alors coupée durant une étape 36.

L'invention prévoit également un produit programme d'ordinateur comprenant des instructions de code de programme enregistrées sur un support lisible par un ordinateur, pour l'exécution des étapes précédemment décrites.

## Revendications

1. Procédé de contrôle de l'alimentation électrique d'un système de fourniture d'eau chaude comprenant au moins un ballon d'eau (11 ;12 ;13), chaque ballon d'eau comprenant une unité de chauffage électrique (18.1 ;18.2 ;18.3) pour le chauffage de l'eau, une première plage horaire et une seconde plage horaire étant prédéfinies, l'unité de chauffage étant active durant la première plage horaire, le procédé comprenant les étapes suivantes:
- réception d'une commande de coupure de l'alimentation électrique du système comportant un instant de coupure ;
- coupure conditionnelle de l'alimentation électrique de l'unité de chauffage en fonction d'une position temporelle de l'instant de coupure par rapport aux première et seconde plages horaires, dans lequel si l'instant de coupure appartient à la première plage horaire, l'alimentation électrique de l'unité de chauffage (18.1; 18.2; 18.3) du ballon d'eau (11; 12; 13) est coupée, et dans lequel le système comprend en outre des moyens de puisage (10) d'eau froide en entrée du système, la seconde plage horaire étant divisée en des première et seconde parties, dans lequel un seuil de relance est prédéterminé, dans lequel l'unité de chauffage (18.1 ; 18.2; 18.3) du ballon (11; 12; 13) est active si, à l'issue de la première partie de la seconde plage horaire, un volume puisé par le système est supérieur audit seuil de relance, **caractérisé en ce que** le seuil de relance prédéterminé a une valeur initiale, et **en ce que** le procédé comprend en outre, durant la seconde plage horaire suivant la première plage horaire comprenant l'instant de coupure, la fixation du seuil de relance à une valeur inférieure à la valeur initiale.

2. Procédé selon la revendication 1, dans lequel le système comprend en outre des moyens de puisage (10) d'eau froide en entrée du système, la seconde plage horaire étant divisée en des première et seconde parties, dans lequel un seuil de relance est prédéterminé, dans lequel l'unité de chauffage (18.1 ;18.2 ;18.3) du ballon (11 ;12 ;13) est active si, à l'issue de la première partie de la seconde plage horaire, un volume puisé par le système est supérieur audit seuil de relance,
et dans lequel, si l'instant de coupure appartient à la seconde plage horaire, l'alimentation électrique de l'unité de chauffage du ballon d'eau est coupée si l'instant de coupure est antérieur à un instant donné et la coupure est effective jusqu'à l'instant donné.

3. Procédé selon la revendication 2, dans lequel l'instant donné dépend d'un instant de fin de relance prédéterminé, d'une durée de relance et d'une durée pendant laquelle l'unité de chauffage (18.1 ; 18.2; 18.3) du ballon (11 ;12 ;13) est active dans la période de la seconde plage horaire précédant l'instant de coupure.

4. Procédé selon l'une des revendications 1 à 3, dans lequel la coupure d'une l'unité de chauffage (18.1; 18.2; 18.3) comprend une durée de coupure de l'unité de chauffage.

5. Procédé selon l'une des revendications 1 à 4, dans lequel, si à l'issue de la première plage horaire à laquelle appartient l'instant de coupure, une température du ballon d'eau est inférieure à une température prédéterminée, le procédé comprend la relance de l'unité de chauffage du ballon d'eau durant la seconde plage horaire consécutive à ladite première plage horaire, pendant une durée égale à ladite durée de coupure de l'unité de chauffage.

6. Procédé selon l'une des revendications précédentes, dans lequel le système comprend au moins trois ballons d'eau (11 ; 12 ; 13), dont un ensemble d'entrée comprenant au moins un ballon d'entrée (11) comprenant des moyens de puisage (10) d'eau froide en entrée du système, un ensemble de soutirage comprenant au moins un ballon de soutirage (13) comprenant des moyens de soutirage (14) pour délivrer de l'eau chaude en sortie du système, et un ballon de relance (12) compris entre l'ensemble d'entrée et l'ensemble de soutirage, dans lequel la coupure conditionnelle de l'alimentation électrique est appliquée à l'unité de chauffage (18.2) du ballon de relance.

7. Produit programme d'ordinateur comprenant des instructions de code de programme enregistrées sur un support lisible par un ordinateur, pour l'exécution des étapes du procédé selon la revendication 1.

8. Dispositif de contrôle de l'alimentation électrique d'un système de fourniture d'eau chaude comprenant au moins un ballon d'eau (11 ; 12 ; 13), chaque ballon d'eau comprenant une unité de chauffage électrique (18.1 ;18.2 ;18.3) pour le chauffage de l'eau, une première plage horaire et une seconde plage horaire étant prédéfinies, l'unité de chauffage étant active durant la première plage horaire, le dispositif (15) comprenant :
- une unité de réception (22) d'une commande de coupure de l'alimentation électrique du système comportant un instant de coupure ;
- une unité de détermination (23) d'un ordre de coupure de l'alimentation électrique de l'unité de chauffage en fonction d'une position temporelle de l'instant de coupure par rapport aux première et seconde plages horaires, dans lequel si l'instant de coupure appartient à la première plage horaire, l'alimentation électrique de l'unité de chauffage (18.1; 18.2; 18.3) du ballon d'eau (11; 12; 13) est coupée, et dans lequel le système comprend en outre des moyens de puisage (10) d'eau froide en entrée du système, la seconde plage horaire étant divisée en des première et seconde parties, dans lequel un seuil de relance est prédéterminé, dans lequel l'unité de chauffage (18.1 ; 18.2; 18.3) du ballon (11; 12; 13) est active si, à l'issue de la première partie de la seconde plage horaire, un volume puisé par le système est supérieur audit seuil de relance, **caractérisé en ce que** le seuil de relance prédéterminé a une valeur initiale, et **en ce que** le procédé comprend en outre, durant la seconde plage horaire suivant la première plage horaire comprenant l'instant de coupure, la fixation du seuil de relance à une valeur inférieure à la valeur initiale.

9. Système de fourniture d'eau chaude comprenant au moins un ballon d'eau (11 ;12 ;13), chaque ballon d'eau comprenant une unité de chauffage électrique (18.1 ;18.2 ;18.3) pour le chauffage de l'eau, une première plage horaire et une seconde plage horaire étant prédéfinies, l'unité de chauffage étant active durant la première plage horaire, ledit système comprenant en outre un dispositif de contrôle (15) de l'alimentation électrique selon la revendication 8.

## Patentansprüche

1. Verfahren zur Steuerung der Stromversorgung eines Warmwasserversorgungssystems mit wenigstens einem Wasserspeicher (11; 12; 13), wobei jeder Wasserspeicher eine elektrische Heizeinheit (18.1; 18.2; 18.3) zum Erhitzen des Wassers umfasst, wobei ein erster Zeitabschnitt und ein zweiter Zeitabschnitt vordefiniert sind, wobei die Heizeinheit während des ersten Zeitabschnitts aktiv ist, wobei das Verfahren die folgenden Schritte umfasst:
- Empfangen eines Befehls zum Abschalten der Stromversorgung des Systems, der einen Abschaltzeitpunkt umfasst;
- bedingtes Abschalten der Stromversorgung der Heizeinheit in Abhängigkeit von einer zeitlichen Position des Abschaltzeitpunkts in Bezug auf den ersten und den zweiten Zeitabschnitt, wobei, wenn der Abschaltzeitpunkt in den ersten Zeitabschnitt fällt, die Stromversorgung der Heizeinheit (18. 1; 18.2; 18.3) des Wasserspeichers (11; 12; 13) abgeschaltet wird, und wobei das System ferner Mittel (10) zur Entnahme von Kaltwasser am Eingang des Systems umfasst, wobei der zweite Zeitabschnitt in einen ersten und einen zweiten Teil unterteilt ist, wobei ein Wiederanlauf-Schwellenwert vorbestimmt ist, wobei die Heizeinheit (18; 18.2; 18.3) des Speichers (11; 12; 13) aktiv ist, wenn am Ende des ersten Teils des zweiten Zeitabschnitts ein vom System entnommenes Volumen größer ist als der Wiederanlauf-Schwellenwert, **dadurch gekennzeichnet, dass** der vorbestimmte Wiederanlauf-Schwellenwert einen Anfangswert aufweist, und dass das Verfahren ferner umfasst, dass während des zweiten Zeitabschnitts nach dem ersten Zeitabschnitt, welcher den Abschaltzeitpunkt umfasst, der Wiederanlauf-Schwellenwert auf einen Wert unterhalb des Anfangswertes festgesetzt wird.

2. Verfahren nach Anspruch 1, wobei das System ferner Mittel (10) zur Entnahme von Kaltwasser am Eingang des Systems umfasst, wobei der zweite Zeitabschnitt in einen ersten und einen zweiten Teil unterteilt ist, wobei ein Wiederanlauf-Schwellenwert vorbestimmt wird, wobei die Heizeinheit (18.1; 18.2; 18.3) des Speichers (11; 12; 13) aktiv ist, wenn am Ende des ersten Teils des zweiten Zeitabschnitts ein vom System entnommenes Volumen größer als der Wiederanlauf-Schwellenwert ist,
und wobei, wenn der Abschaltzeitpunkt in den zweiten Zeitabschnitt fällt, die Stromversorgung der Wasserspeicher-Heizeinheit abgeschaltet wird, wenn der Abschaltzeitpunkt vor einem gegebenen Zeitpunkt liegt, und das Abschalten bis zu dem gegebenen Zeitpunkt wirksam ist.

3. Verfahren nach Anspruch 2, wobei der vorgegebene Zeitpunkt von einem vorbestimmten Wiederanlauf-Endzeitpunkt, einer Wiederanlaufdauer und einer Dauer abhängt, während der die Heizeinheit (18.1; 18.2; 18.3) des Speichers (11; 12; 13) in dem Zeitraum des zweiten Zeitabschnitts vor dem Abschaltzeitpunkt aktiv ist.

4. Verfahren nach einem der Ansprüche 1 bis 3, wobei das Abschalten einer Heizeinheit (18.1; 18.2; 18.3) eine Abschaltdauer der Heizeinheit umfasst.

5. Verfahren nach einem der Ansprüche 1 bis 4, wobei, wenn am Ende des ersten Zeitabschnitts, zu dem der Abschaltzeitpunkt gehört, eine Temperatur des Wasserspeichers unter einer vorbestimmten Temperatur liegt, das Verfahren das Wiederanlaufen der Heizeinheit des Wasserspeichers während des zweiten Zeitabschnitts, der auf den ersten Zeitabschnitt folgt, für eine Dauer, die gleich der Dauer des Abschaltens der Heizeinheit ist, umfasst.

6. Verfahren nach einem der vorhergehenden Ansprüche, wobei das System wenigstens drei Wasserspeicher (11; 12; 13) umfasst, darunter eine Eingangsanordnung, umfassend wenigstens einen Eingangsspeicher (11), der Mittel (10) zur Entnahme von Kaltwasser am Eingang des Systems umfasst, eine Entnahmeanordnung, umfassend wenigstens einen Entnahmespeicher (13), der Entnahmemittel (14) zur Abgabe von Warmwasser am Ausgang des Systems umfasst, und einen Wiederanlaufspeicher (12), der zwischen der Eingangsanordnung und der Entnahmeanordnung vorhanden ist, wobei das bedingte Abschalten der Stromversorgung auf die Heizeinheit (18. 2) des Wiederanlaufspeichers angewendet wird.

7. Computerprogrammprodukt mit Programmcodeanweisungen, die auf einem computerlesbaren Medium aufgezeichnet sind, zur Durchführung der Schritte des Verfahrens nach Anspruch 1.

8. Vorrichtung zur Steuerung der Stromversorgung eines Warmwasserversorgungssystems mit wenigstens einem Wasserspeicher (11; 12; 13), wobei jeder Wasserspeicher eine elektrische Heizeinheit (18.1; 18.2; 18.3) zum Erhitzen von Wasser umfasst, wobei ein erster Zeitabschnitt und ein zweiter Zeitabschnitt vordefiniert sind, wobei die Heizeinheit während des ersten Zeitabschnitts aktiv ist, wobei die Vorrichtung (15) umfasst:
- eine Empfangseinheit (22) für einen Befehl zum Abschalten der Stromversorgung des Systems, der einen Abschaltzeitpunkt umfasst;
- eine Bestimmungseinheit (23) für einen Befehl zum Abschalten der Stromversorgung der Heizeinheit in Abhängigkeit von einer zeitlichen Position des Abschaltzeitpunkts in Bezug auf den ersten und den zweiten Zeitabschnitt, wobei, wenn der Abschaltzeitpunkt zum ersten Zeitabschnitt gehört, die Stromversorgung der Heizeinheit (18. 1; 18.2; 18.3) des Wasserspeichers (11; 12; 13) abgeschaltet wird, und wobei das System ferner Mittel (10) zur Entnahme von Kaltwasser am Eingang des Systems umfasst, wobei der zweite Zeitabschnitt in einen ersten und einen zweiten Teil unterteilt ist, wobei ein Wiederanlauf-Schwellenwert vorbestimmt ist, wobei die Heizeinheit (18; 18.2; 18.3) des Wasserspeichers (11; 12; 13) aktiv ist, wenn am Ende des ersten Teils des zweiten Zeitabschnitts ein von dem System entnommenes Volumen größer ist als der Wiederanlauf-Schwellenwert,
**dadurch gekennzeichnet, dass** der vorbestimmte Wiederanlauf-Schwellenwert einen Anfangswert hat, und dass das Verfahren ferner umfasst, dass während des zweiten Zeitabschnitts nach dem ersten Zeitabschnitt, der den Abschaltzeitpunkt umfasst, der Wiederanlauf-Schwellenwert auf einen Wert unterhalb des Anfangswerts festgesetzt wird.

9. Warmwasserversorgungssystem mit wenigstens einem Wasserspeicher (11; 12; 13), wobei jeder Wasserspeicher eine elektrische Heizeinheit (18.1; 18.2; 18.3) zum Erhitzen des Wassers umfasst, wobei ein erster Zeitabschnitt und ein zweiter Zeitabschnitt vordefiniert sind, wobei die Heizeinheit während des ersten Zeitabschnitts aktiv ist, wobei das System ferner eine Steuervorrichtung (15) für die Stromversorgung nach Anspruch 8 umfasst.

## Claims

1. A method for controlling the electric power supply of a hot water supply system comprising at least one water tank (11; 12; 13), each water tank comprising an electric heating unit (18.1; 18.2 18.3) for heating water, a first time slot and a second time slot being predefined, the heating unit being active during the first time slot, the method comprising the following steps:
- receiving a command for cutting the electric power supply of the system including a cutting time;
- conditionally cutting the electric power supply of the heating unit as a function of a temporal position of the cutting time relative to the first and second time slots, wherein if the cutting time belongs to the first time slot, the electric power supply of the heating unit (18.1; 18.2; 18.3) of the water tank (11; 12; 13) is cut, and wherein the system further comprises means (10) for drawing cold water at the inlet of the system, the second time slot being divided into first and second parts, wherein a restart threshold is predetermined, wherein the heating unit (18.1; 18.2; 18.3) of the tank (11; 12; 13) is active if, at the end of the first part of the second time slot, a volume drawn by the system is larger than said restart threshold,
**characterised in that** the predetermined restart threshold has an initial value,
and **in that** the method further comprises, during the second time slot following the first time slot comprising the cutting time, setting the restart threshold at a value lower than the initial value.

2. The method according to claim 1, wherein the system further comprises means (10) for drawing cold water at the inlet of the system, the second time slot being divided into first and second parts, wherein a restart threshold is predetermined , wherein the heating unit (18.1; 18.2; 18.3) of the tank (1 1; 12; 13) is active if, at the end of the first part of the second time slot, a volume drawn by the system is larger than said restart threshold,
and wherein, if the cutting time belongs to the second time slot, the electric power supply of heating of the water tank is cut if the cutting time is prior to a given time and the cutting is effective until the given time.

3. The method according to claim 2, wherein the given time depends on a predetermined restart end time, a restart duration and a duration during which the heating unit (18.1; 18.2; 18.3) of the tank (11; 12; 13) is active in the period of the second time slot preceding the cutting time.

4. The method according to one of claims 1 to 3, wherein the cutting of a heating unit (18.1; 18.2; 18.3) comprises a cutting duration of the heating unit.

5. The method according to one of claims 1 to 4, wherein, if at the end of the first time slot to which the cutting time belongs, a temperature of the water tank is lower than a predetermined temperature, the method comprises restarting the heating unit of the water tank during the second time slot consecutive to said first time slot, for a duration equal to said cutting duration of the heating unit.

6. The method according to one of the preceding claims, wherein the system comprises at least three water tanks (11; 12; 13), including an inlet assembly comprising at least one inlet tank (11) comprising means (10) for drawing cold water at the inlet of the system, a bleeding assembly comprising at least one bleeding tank (13) comprising bleeding means (14) for delivering hot water at the outlet of the system, and a restart tank (12) comprised between the inlet assembly and the bleeding assembly, wherein the conditional cutting of the electric power supply is applied to the heating unit (18.2) of the restart tank.

7. A computer program product comprising program code instructions recorded on a computer-readable medium, for the execution of the steps of the method according to claim 1.

8. A device for controlling the electric power supply of a hot water supply system comprising at least one water tank (11; 12; 13), each water tank comprising an electric heating unit (18.1; 18.2; 18.3) for heating water, a first time slot and a second time slot being predefined, the heating unit being active during the first time slot, the device (15) comprising:
- a unit (22) for receiving a command to cut the electric power supply of the system comprising a cutting time;
- a unit (23) for determining an order to cut the electric power supply of the heating unit as a function of a temporal position of the cutting time relative to the first and second time slots, wherein if the cutting time belongs to the first time slot, the electric power supply of the heating unit (18.1; 18.2; 18.3) of the water tank (11; 12; 13) is cut, and wherein the system further comprises means (10) for drawing cold water at the inlet of the system, the second time slot being divided into first and second parts, wherein a restart threshold is predetermined, wherein the heating unit (18.1; 18.2; 18.3) of the tank (11; 12; 13) is active if, at the end of the first part of the second time slot, a volume drawn by the system is larger than said restart threshold, **characterised in that** the predetermined restart threshold has an initial value,
and **in that** the method further comprises, during the second time slot following the first time slot comprising the cutting time, setting the restart threshold at a value lower than the initial value.

9. A hot water supply system comprising at least one water tank (11; 12; 13), each water tank comprising an electric heating unit (18.1; 18.2; 18.3) for heating water, a first time slot and a second time slot being predefined, the heating unit being active during the first time slot, said system further comprising a device (15) for controlling the electric power supply according to claim 8.
